(19) Europäisches Patentamt
European Patent Office
Office européen des brevets

(11) **EP 4 600 097 A2**

(12) **EUROPEAN PATENT APPLICATION**

(43) Date of publication:
**13.08.2025 Bulletin 2025/33**

(21) Application number: **25179833.6**

(22) Date of filing: **30.05.2025**

(51) International Patent Classification (IPC):
**B60T 7/22** (2006.01)          **B60T 8/1755** (2006.01)

(52) Cooperative Patent Classification (CPC):
**B60T 7/22; B60T 8/17558; B60W 30/0953;
B60W 30/0956; B60W 60/0016**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.05.2024   CN 202410706236**

(71) Applicant: **Shanghai Horizon Intelligent
Automotive
Technology Co., Ltd.
Shanghai Jiading District 201800 (CN)**

(72) Inventors:
• **ZHANG, Yujia**
  **Shanghai, 201800 (CN)**
• **ZENG, Luyao**
  **Shanghai, 201800 (CN)**
• **KONG, Yiting**
  **Shanghai, 201800 (CN)**
• **GAO, Zhi**
  **Shanghai, 201800 (CN)**
• **SONG, Wei**
  **Shanghai, 201800 (CN)**

(74) Representative: **Patentanwälte Magenbauer &
Kollegen
Partnerschaft mbB
Plochinger Straße 109
73730 Esslingen (DE)**

(54) **INTELLIGENT DRIVING DECISION-MAKING METHOD, APPARATUS, STORAGE MEDIUM, AND ELECTRONIC DEVICE**

(57)      An intelligent driving decision-making method, device, storage medium, and electronic device are disclosed. The method includes: determining, based on driving data detected by a vehicle, a first motion parameter of the vehicle, a second motion parameter of a target object with a collision risk relative to the vehicle, and a safety margin; determining, based on the first motion parameter and the second motion parameter, a time to collision at which the vehicle is predicted to collide with the target object, and an intersection relationship between the vehicle and the target object in an image domain during a collision period from the current time to a collision time; determining, based on the first motion parameter, the second motion parameter, the safety margin, and the time to collision, an emergency braking decision-making result in response to the time to collision being less than or equal to the preset duration threshold and the intersection relationship being an intersection; performing intelligent driving of the vehicle based on the emergency braking decision-making result.

FIG. 1

**Description**

**FIELD OF THE PRESENT DISCLOSURE**

The present disclosure relates to the technical field of intelligent driving, and more particularly, to an intelligent driving decision-making method, apparatus, storage medium, and electronic device.

**BACKGROUND OF THE PRESENT DISCLOSURE**

An autonomous emergency braking system (AEB) is an active vehicle safety technology designed to automatically detect obstacles in front, assess the collision risk, issue alert prompt, and even initiate autonomous emergency braking when necessary, to ensure safe driving. In the prior art, the AEB system judges whether to trigger the AEB function based on a single decision-making model, and there may be misidentification in a complex or special scenario, so as to a decision-making error, which causes the AEB system to trigger incorrectly in a non-emergency situation, thereby causing a potential threat to the safe driving of a vehicle, and also causing a certain impact on the riding experience of the riding personnel.

**SUMMARY OF THE PRESENT DISCLOSURE**

In order to solve the technical problem of false triggering of the AEB system in non-emergency situations existing in the prior art, the present disclosure provides an intelligent driving decision-making method, apparatus, storage medium, and electronic device, so as to reduce the occurrence of false triggering of the AEB system, thereby improving the driving safety and driving comfort of a vehicle.

In a first aspect of an embodiment of the present disclosure, there is provided an intelligent driving decision-making method including:

determining, based on driving data detected by a vehicle, a first motion parameter of the vehicle, a second motion parameter of a target object with a collision risk relative to the vehicle, and a safety margin;
determining, based on the first motion parameter and the second motion parameter, a time to collision at which the vehicle is predicted to collide with the target object, and an intersection relationship between the vehicle and the target object in an image domain during a collision period from the current time to a collision time;
determining, based on the first motion parameter, the second motion parameter, the safety margin, and the time to collision, an emergency braking decision-making result in response to the time to collision being less than or equal to a preset duration threshold and the intersection relationship being an intersection; and
performing intelligent driving of the vehicle based on the emergency braking decision-making result.

In a second aspect of an embodiment of the present disclosure, there is provided an intelligent driving decision-making apparatus including:

a first determination module, configured for determining, based on driving data detected by a vehicle, a first motion parameter of the vehicle, a second motion parameter of a target object with a collision risk relative to the vehicle, and a safety margin;
a second determination module, configured for determining, based on the first motion parameter and the second motion parameter, a time to collision at which the vehicle is predicted to collide with the target object, and an intersection relationship between the vehicle and the target object in an image domain during a collision period from the current time to the collision time;
a third determination module, configured for determining, based on the first motion parameter, the second motion parameter, the safety margin, and the time to collision, an emergency braking decision-making result in response to the time to collision being less than or equal to a preset duration threshold and the intersection relationship being an intersection; and
a driving module, configured for performing intelligent driving of the vehicle based on the emergency braking decision-making result.

In a third aspect of an embodiment of the present disclosure, there is provided a computer-readable storage medium storing a computer program thereon, which, when executed by a processor, causes the processor to implement the intelligent driving decision-making method based on the first aspect of the embodiment of the present disclosure.

In a fourth aspect of an embodiment of the present disclosure, there is provided electronic device including:

a processor; and

a memory for storing the processor-executable instructions;

wherein the processor is configured for reading the instructions from the memory and executing the instructions to implement the intelligent driving decision-making method proposed in the first aspect of the embodiment of the present disclosure.

In a fifth aspect of an embodiment of the present disclosure, there is provided a computer program product which, when executed by an instruction processor in the computer program product, causes the instruction processor to perform the intelligent driving decision-making method in the first aspect of the embodiment of the present disclosure.

In embodiments of the present disclosure, there is provided an intelligent driving decision-making method applied to a vehicle having an AEB system, which detects driving data in real-time while traveling, and determines, based on the driving data, a first motion parameter of the vehicle, a second motion parameter of a target object with the collision risk to the vehicle around the vehicle, and a safety margin. Based on the first motion parameter and the second motion parameter, the time to collision at which the vehicle collides with the target object is determined, and whether the vehicle and the target object intersect in the image domain during a collision period from the current time to a collision time is determined. When the time to collision is less than or equal to the preset duration threshold and the vehicle intersects with the target object in the image domain during the collision period, the emergency braking decision-making result is determined based on the first motion parameter, the second motion parameter, the time to collision and the safety margin, i.e. the decision result of determining whether to trigger the AEB system. Finally, based on the emergency braking decision-making results, the intelligent driving of the vehicle is performed. Through the intersection relationship between the vehicle and the target object in the image domain, this method can improve the accuracy of decision-making, and reduce the occurrence of false triggering of the AEB system in non-emergency situations due to measurement error or calculation error, thereby ensuring that the AEB system triggers the emergency braking function in emergencies to reduce the collision loss and achieving the effect of improving the driving safety and driving comfort with an additional consideration of triggering whether to trigger the emergency braking function.

## BRIEF DESCRIPTION OF THE DRAWINGS

FIG. 1 is a schematic diagram of an application scenario of an intelligent driving decision-making method according to an exemplary embodiment of the present disclosure;

FIG. 2 is a structural block diagram of an intelligent driving decision-making system according to an exemplary embodiment of the present disclosure;

FIG. 3 is a schematic flow diagram of an intelligent driving decision-making method according to an exemplary embodiment of the present disclosure;

FIG. 4 is a schematic flow diagram of an intelligent driving decision-making method according to another exemplary embodiment of the present disclosure;

FIG. 5 is a schematic flow diagram of an intelligent driving decision-making method according to yet another exemplary embodiment of the present disclosure;

FIG. 6 is a schematic diagram of a multi-frame historical environment image and the historical bounding boxes of a target object therein according to an exemplary embodiment of the present disclosure;

FIG. 7 is a schematic flow diagram of an intelligent driving decision-making method according to yet another exemplary embodiment of the present disclosure;

FIG. 8 is a schematic diagram of an image of a vehicle safe area in a vehicle coordinate system and a camera coordinate system according to an exemplary embodiment of the present disclosure;

FIG. 9 is a schematic diagram of a safe area image corresponding to a safe area and a predicted bounding box according to an exemplary embodiment of the present disclosure;

FIG. 10 is a schematic flow diagram of an intelligent driving decision-making method according to yet another exemplary embodiment of the present disclosure;

FIG. 11 is a schematic flow diagram of an intelligent driving decision-making method according to yet another exemplary embodiment of the present disclosure;

FIG. 12 is a schematic flow diagram of an intelligent driving decision-making method according to yet another exemplary embodiment of the present disclosure;

FIG. 13 is a schematic flow diagram of an intelligent driving decision-making method according to yet another exemplary embodiment of the present disclosure;

FIG. 14 is a schematic flow diagram of an intelligent driving decision-making method according to yet another exemplary embodiment of the present disclosure;

FIG. 15 is a schematic diagram of the constitutional structure of an intelligent driving decision-making apparatus according to an exemplary embodiment of the present disclosure;

FIG. 16 is a schematic diagram of a constitutional structure of an intelligent driving decision-making apparatus according to another exemplary embodiment of the present disclosure; and

FIG. 17 is a schematic diagram of a constitutional structure of electronic device according to an exemplary embodiment of the present disclosure.

## DESCRIPTION OF THE EMBODIMENTS

In order to explain the present disclosure, exemplary embodiments of the present disclosure will be described in detail below with reference to the accompanying drawings. It will be apparent that the described embodiments are only a part of the embodiments of the present disclosure, not all of them, and it should be understood that the present disclosure is not limited to the exemplary embodiments.

Note that, the relative arrangement of parts and steps, numerical expressions, and numerical values set forth in these embodiments do not limit the scope of the present disclosure unless specifically stated otherwise.

SUMMARY OF APPLICATION

The intelligent driving system includes an automatic driving system and an assisted driving system. The assisted driving system is also referred to as a driving assistance system and refers to a system that monitors a driver, a vehicle, and a running environment thereof in real-time using sensors, communication, decision-making, and execution devices mounted on the vehicle and assists the driver in driving by means of information, motion control, and the like. And the assisted driving system for assisted braking, i.e. an autonomous emergency braking (AEB) system, is increasingly in need of reliable assurance in vehicle assisted driving technology. While the vehicle is running, by detecting information such as the speed of the obstacle around the ego vehicle, and the distance between the obstacle and the ego vehicle in real time by the detection device, the collision risk between the vehicle and the obstacle around the ego vehicle is calculated. When there is a collision risk and the driver does not take effective avoidance measures, the AEB system will trigger an emergency braking to reduce the collision loss. The AEB system can be divided into three parts: perception, decision-making, and execution. It is noted that the assisted driving system as an example of the intelligent driving system is described herein, and the ego vehicle refers to the vehicle on which the assisted driving decision is made unless specified specifically herein.

While a driver drives a vehicle, a sensor such as a millimeter-wave radar, a laser radar, or a camera on the vehicle is used as a detection device to process a driving environment around the ego vehicle to obtain environmental perception information, and a relative position between the ego vehicle and another obstacle in the driving environment, and motion parameters such as a speed and an acceleration of the obstacle are determined based on the environmental perception information.

Then, an electronic control unit (ECU) of the vehicle performs decision analysis based on the speed and acceleration of the ego vehicle, the speed and acceleration of the obstacle, and the distance between the ego vehicle and the obstacle to judge whether there is a collision risk between the ego vehicle and the obstacle. When it is determined that there is a collision risk, the AEB system triggers the emergency braking function and takes corresponding measures based on the emergency level.

The AEB system determines that there is a potential safety hazard when the vehicle is close to an obstacle during normal driving, such as when the vehicle encounters an emergency brake on the front vehicle (obstacle) or when another vehicle changes lanes, or when a pedestrian crosses the road. The system first alerts the driver by means of an audible alarm, a dashboard prompt, or a steering wheel vibration, thus prompting the driver to take precautions. If the driver does not take braking measures or does not apply enough braking force after the alert prompt is issued, and the AEB system determines that the situation is dangerous, a partial braking command will be issued, and a partial braking force will be applied to perform assisted braking, so as to draw the driver's attention and prompt him to take avoidance measures. If the driver has not taken any braking measures, the AEB system will actively intervene when the distance between the vehicle and the obstacle in front is less than the safe distance by issuing a full braking command, and the execution device will perform autonomous emergency braking of the vehicle based on the full braking command to the maximum extent to decelerate the vehicle, thereby reducing the probability of collision between the vehicle and the obstacle in front, reducing the collision loss, and improving driving safety.

The AEB system can accurately perceive and correctly decide the surrounding driving environment when the vehicle is running under the normal driving environment with normal light and no external interference. When an emergency occurs, a full braking command may be issued. For example, to avoid a collision or to respond to a sudden condition, the AEB system requires the vehicle to slow down in the shortest amount of time or even stop completely, and enables the full braking capability of the vehicle for braking (full braking). However, the decision method used in judging whether to trigger the emergency braking function in the prior art relies on a single decision-making model, and if it is affected by factors such as ambient light, external interference, and so on, or in some complex special scenes, it may cause a decision error due to perception error or interference effect, resulting in that the AEB system is triggered incorrectly in non-emergency situations. When false triggering of the AEB system in non-emergency situations occurs, it may lead to rear-end collision, which poses a great threat to the safe driving of the vehicle, and also affects the rider's ride-on experience. In addition, full braking makes the vehicle quickly decelerate, which may affect the vehicle's braking system, tires, and vehicle structure. It can be seen that the accuracy of decision-making in the AEB system is one of the key technical points of vehicle active safety function technology, which is of great significance to vehicle safety and stability.

In order to solve the technical problems in the prior art that, due to relying on a single decision-making model to make a decision, the AEB system is liable to falsely trigger an emergency braking function, increase driving risk, and reduce driving comfortableness, there is provided an intelligent driving decision-making method according to an embodiment of the present disclosure, in which a decision is made on whether a vehicle intersects with a target object in an image domain based on an existing AEB system decision model, and when a time to collision in the AEB system decision-making model is less than or equal to a preset duration threshold and the vehicle intersects with the target object in the image domain, it is determined that the emergency brake is triggered if the lateral distance between the vehicle and the target object at the collision time is less than the safety margin. Combining the numerical domain and the image domain to make the decision of triggering emergency braking can improve the accuracy of decision-making, reduce the occurrence of false triggering of AEB system in non-emergency situations due to measurement error or calculation error, and ensure that the AEB system triggers emergency braking function in an emergency to reduce collision loss, thereby improving vehicle driving safety and driving comfort.

Exemplary system

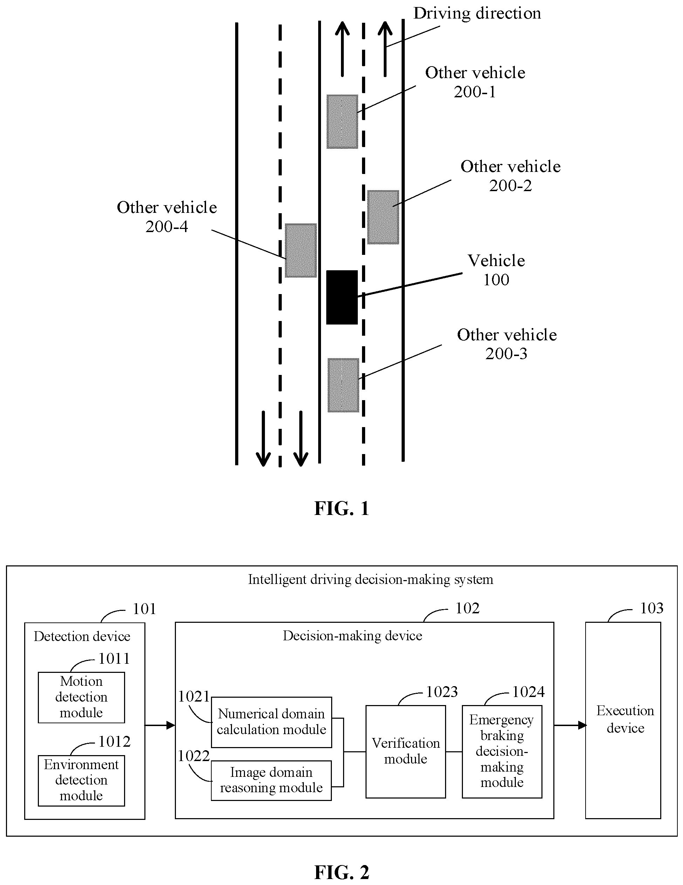

FIG. 1 is a schematic diagram of an application scenario of an intelligent driving decision-making method according to an exemplary embodiment of the present disclosure. As shown in FIG. 1, the scene includes vehicle 100 and other vehicles 200 running around the vehicle 100, the other vehicles 200 may be a plurality of vehicles, and other vehicles 200-1, 200-2, 200-3, and 200-4 are illustrated in FIG. 1. The other vehicle 200-1 is a vehicle in front of the vehicle 100 running in the lane in which the vehicle 100 is located, the other vehicle 200-2 is a vehicle in front of the vehicle 100 running in another lane, the other vehicle 200-3 is a vehicle behind running in the lane in which the vehicle 100 is located, and the other vehicle 200-4 is a vehicle running in an opposite lane. The driving state of the other vehicles 200-1 and 200-2 is mainly taken into consideration when the driver drives the vehicle 100.

Under normal conditions, when the other vehicle 200-1 decelerates, or when the other vehicle 200-2 running in the other lane is changing to the lane in which the vehicle 100 is located, the distance between the vehicle 100 and the other vehicle 200-1 or the other vehicle 200-2 running ahead is getting closer and closer, the driver should actively brake to avoid a collision, or when the driver observes that no vehicle is running in the other lane, the driver may change lane to avoid a collision by turning. However, in practice, when various sudden situations may occur, such as the vehicle 100 speed being too fast, the front vehicle suddenly braking, other vehicles suddenly changing into the lane where the ego vehicle (i.e. the vehicle 100) is located, other obstacles suddenly appearing, the driver fatigue driving, the driver's sudden physical diseases, etc., failure to take effective avoidance measures in time may result in a collision between the vehicle 100 and other vehicles.

In order to reduce the probability that the vehicle 100 collides with other vehicles and reduce collision loss, an intelligent driving decision system as shown in FIG. 2 is provided on the vehicle 100 according to the embodiments of the present disclosure, and the intelligent driving decision system may include a detection device 101, a decision-making device 102, and an execution device 103.

The detection device 101 is configured to detect driving data in real-time and may include a motion detection module 1011 and an environment detection module 1012. The motion detection module 1011 may include a plurality of sensors provided on the vehicle 100, such as a vehicle speed sensor, an accelerator pedal position sensor, an acceleration sensor, a distance sensor, and a gyroscope, which are used for collecting driving data of the vehicle 100 itself to obtain vehicle driving data. The environment detection module 1012 may include a plurality of sensors provided on the vehicle 100, such as an on-vehicle camera, a laser radar, a millimeter wave radar, etc., which are used for collecting data of the environment surrounding the vehicle 100 to obtain driving environment data.

The decision device 102 may include a numerical domain calculation module 1021, an image domain reasoning module 1022, a verification module 1023, and an emergency braking decision-making module 1024. The numerical domain calculation module 1021 is used for determining a first motion parameter of the vehicle 100 based on the vehicle driving data in the numerical domain based on the Kinematic Principles, and determining a second motion parameter of a target object with a collision risk relative to the vehicle 100 based on the driving environment data, and calculating a time to collision (TTC) between the vehicle 100 and the target object in the numerical domain. The image domain reasoning module 1022 is configured to determine a historical bounding box sequence of the target object in the image with the front view of the vehicle 100 as a first-person view (FPV) during a past period of time based on the driving environment data and to infer a predicted bounding box sequence of the target object in the FPV image during a collision period (also referred to as "collision evolution period") from the current time to a collision time. The verification module 1023 is used for judging whether the numerical domain and the image domain satisfy a verification condition, namely, judging whether the TTC satisfies a preset duration threshold corresponding to the AEB system in the numerical domain (i.e., TTC satisfies TTC being less than or equal to a preset duration threshold corresponding to the AEB system in the numerical domain), and judging whether the vehicle 100 intersects with the target object in the image domain. When the verification module 1023 determines that both the numerical domain and the image domain satisfy the verification condition (namely, the time to collision is less than or equal to the preset duration threshold and the intersection relationship is intersection), the emergency braking decision-making module 1024 is used for determining the lateral distance between the vehicle 100 and the target object at the collision time based on the first motion parameter and the second motion parameter and determining the emergency braking decision-making result, namely, whether to trigger the emergency braking, based on the lateral distance and the safety margin corresponding to the target object.

The execution device 103 is configured for intelligently driving the vehicle 100 based on the emergency braking decision-making results. Specifically, when the emergency braking decision-making result characterizes that the AEB function is needed to trigger, the execution device 103 determines the braking emergency level based on the AEB system and the first motion parameter of the vehicle 100 and the second motion parameter of the target object, generates a control command, and performs assisted driving of the vehicle 100 based on the control command, so as to reduce the collision loss and improve the driving safety of the vehicle. When the emergency braking decision-making result characterizes that the AEB function is not needed to trigger, the execution device 103 determines that there is no need to trigger the AEB system for autonomous emergency braking, so as to avoid triggering the emergency braking function in non-emergency situations (i.e., false triggering), which can improve the accuracy of decision-making, reduce the occurrence of false triggering of the AEB system in non-emergency situations due to false recognition, and improve the driving safety and driving comfort of the vehicle.

The intelligent driving decision-making system according to the embodiments of the present disclosure can improve the accuracy of decision-making, avoid false triggering of the emergency braking function in non-emergency situations by combining a numerical domain and an image domain to decide whether an emergency braking function needs to be triggered, thereby reducing the occurrence of false triggering of the AEB system in non-emergency situations due to false recognition, ensuring that the AEB system triggers the emergency braking function in emergencies to reduce collision loss, and improving the driving safety and driving comfort of a vehicle.

Exemplary method

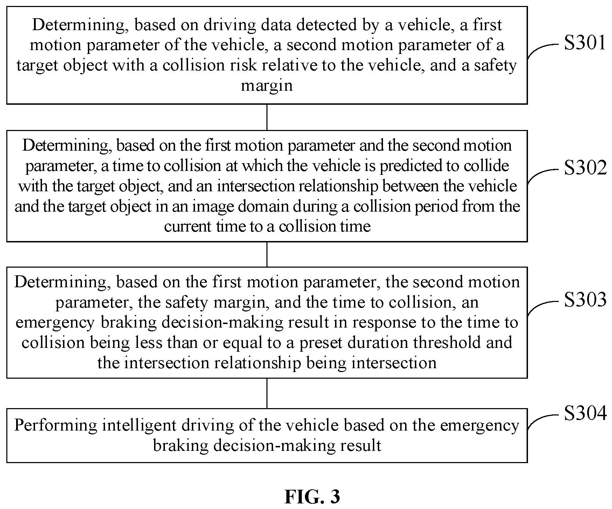

FIG. 3 is a schematic flow diagram of an intelligent driving decision-making method according to an exemplary embodiment of the present disclosure. The method according to the embodiments of the present disclosure may be applied to a vehicle 100 shown in FIG. 1, and as shown in FIG. 3, the intelligent driving decision-making method may include the following steps:
Step S301, determining, based on driving data detected by a vehicle, a first motion parameter of the vehicle, a second motion parameter of a target object with a collision risk relative to the vehicle, and a safety margin.

Embodiments of the present disclosure may be performed by a vehicle 100 (also referred to herein as a ego vehicle) as shown in FIG. 1, and in particular may be performed by an intelligent driving decision-making system as shown in FIG. 2 in the vehicle 100.

While the driver is driving the vehicle, various sensors on the vehicle detect data of the vehicle itself and the driving environment around the vehicle in real-time to obtain driving data. Then, the motion parameters of the ego vehicle and the motion parameters of the target object with a collision risk relative to the vehicle among all the objects in the surrounding environment, and the safety margin of the target object are determined based on the driving data. In the embodiments of the present disclosure, in order to facilitate distinction, the motion parameter of the ego vehicle is referred to as a first motion parameter, and the motion parameter of the target object is referred to as a second motion parameter.

The safety margin is the allowable value of the total uncertainty in the measurement, which is mainly composed of the allowable value of the uncertainty of measuring instruments and the allowable value of the measurement uncertainty caused by the measurement conditions. In the embodiment of the present disclosure, the safety margin is a preset value and is an allowable value indicating that the vehicle can avoid the target object, which is set in advance based on the type of the target object. The safety margin is generally different for different types of target objects.

Step S302, determining, based on the first motion parameter and the second motion parameter, a time to collision at which the vehicle is predicted to collide with the target object, and an intersection relationship between the vehicle and the target object in an image domain during a collision period from the current time to a collision time.

The common decision-making models of the AEB system include a time to collision (TTC) model, safe distance model, minimum deceleration model for collision avoidance, etc. In the embodiment of the present disclosure, the decision-making model is exemplified as a TTC model. Based on the first motion parameter of the vehicle and the second motion parameter of the target object, the duration required for the vehicle and the target object to continue to run in the current state until a collision occurs, i.e. TTC, is calculated in the numerical domain. Based on the first motion parameter of the vehicle and the second motion parameter of the target object, an intersection relationship between the vehicle and the target object in the image domain during the collision period is predicted.

The collision period is a time period between a current time and a collision time. Intersecting relationships include intersecting and non-intersecting. When the positions of the vehicle and the target object in the predicted image overlap during the collision period, the vehicle and the target object are determined as intersection in the image domain. When the positions of the vehicle and the target object in the predicted image during the collision period do not coincide, the vehicle and the target object are determined as non-intersecting in the image domain.

Step S303, determining, based on the first motion parameter, the second motion parameter, the safety margin, and the time to collision, an emergency braking decision-making result in response to the time to collision being less than or equal to a preset duration threshold and the intersection relationship being intersection.

Whether TTC is less than or equal to a preset duration threshold is determined, and whether the intersection relationship between the vehicle and the target object in the image domain during the collision period is intersection is determined. When TTC is less than or equal to a preset duration threshold, and the vehicle intersects with the target object in the image domain during the collision period, it is considered that the verification condition is satisfied in both the numerical domain and the image domain, and at this time, based on the first motion parameter, the second motion parameter, the time to collision and the safety margin, whether to trigger emergency braking is determined, and an emergency braking decision-making result is obtained. The emergency braking decision-making results include triggering emergency braking and not triggering emergency braking.

Step S304, performing intelligent driving of the vehicle based on the emergency braking decision-making result.

When the emergency braking decision-making result is to trigger emergency braking, the AEB system needs to be triggered for autonomous emergency braking. At this time, the AEB system is triggered to assist the driver in driving the vehicle, so as to reduce the collision loss as much as possible and improve the driving safety of the vehicle.

When the emergency braking decision-making result is that emergency braking is not triggered, the AEB system does not need to be triggered for autonomous emergency braking. At this time, it is considered that there is no emergency, and the vehicle does not need to trigger the AEB system to avoid false triggering of the emergency braking function in non-emergency situations, which can reduce the occurrence of false triggering of the AEB system in non-emergency situations due to misidentification, and improve the driving safety and driving comfort of the vehicle.

By the intelligent driving decision-making method according to embodiments of the present disclosure, first, a first motion parameter of the vehicle, a second motion parameter of a target object with a collision risk relative to the vehicle, and a safety margin are determined based on driving data detected by a vehicle; then a time to collision at which the vehicle is predicted to collide s with the target object, and an intersection relationship between the vehicle and the target object in an image domain during a collision period are determined based on the first motion parameter and the second motion parameter; when the time to collision is less than or equal to the preset duration threshold and the intersection relationship being intersection, an emergency braking decision-making result is determined based on the first motion parameter, the second motion parameter, the safety margin, and the time to collision; finally, the intelligent driving of the vehicle is performed based on the emergency braking decision-making result. Through the intersection relationship between the vehicle and the target object in the image domain, this method can improve the accuracy of decision-making, reduce the occurrence of false triggering of the AEB system in non-emergency situations due to measurement error or calculation error, thereby ensuring that the AEB system triggers the emergency braking function in emergencies to reduce the collision loss and improving the driving safety and driving comfort with an additional consideration of triggering whether to trigger the emergency braking function.

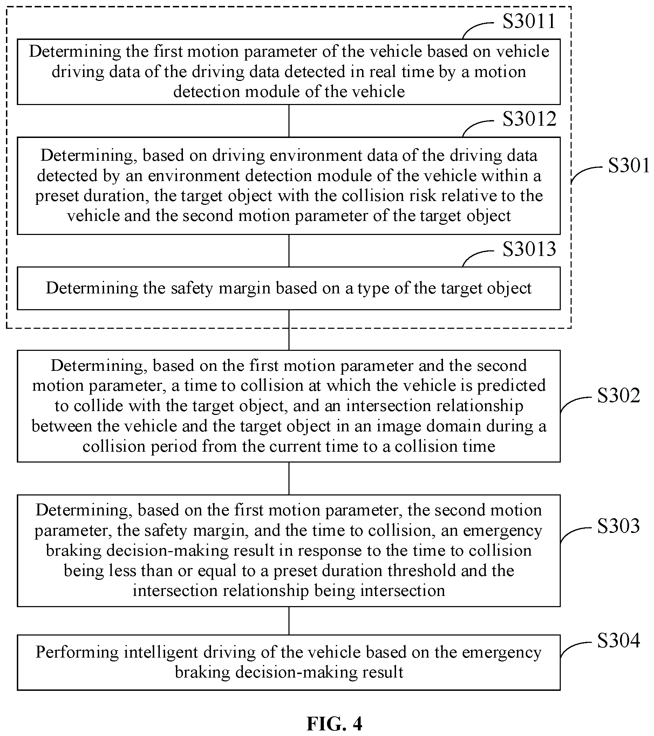

In some embodiments, on the basis of the above-described embodiments, the step S301 of determining, based on driving data detected by a vehicle, a first motion parameter of the vehicle, a second motion parameter of a target object with a collision risk relative to the vehicle, and a safety margin in the above-described embodiments may be implemented by the steps S3011 to S3013 shown in FIG. 4:

Step S3011, determining the first motion parameter of the vehicle based on vehicle driving data of the driving data detected in real time by a motion detection module of the vehicle.

While the driver drives the vehicle, the motion detection module of the vehicle detects the driving data of the vehicle itself in real-time, and obtains the vehicle driving data. The motion detection module may include a plurality of sensors provided on the vehicle such as a vehicle speed sensor, an accelerator pedal position sensor, an acceleration sensor, a distance sensor, and a gyroscope. The corresponding vehicle driving data may include a vehicle speed acquired by a vehicle speed sensor, a pedal position acquired by an accelerator pedal position sensor, an acceleration acquired by an acceleration sensor, a distance acquired by a distance sensor, a yaw angle acquired by a gyroscope, etc.

The first motion parameter of the vehicle is obtained by processing the vehicle driving data detected in real time by the motion detection module. In an embodiment of the present disclosure, the first motion parameter may include a real-time speed and a real-time acceleration of the vehicle. In some embodiments, the first motion parameter may also include other data, such as a yaw angle of the vehicle, a real-time position, etc., which is not limiting in the embodiments of the present disclosure.

Step S3012, determining, based on driving environment data of the driving data detected by an environment detection module of the vehicle within a preset duration, the target object with the collision risk relative to the vehicle and the second motion parameter of the target object.

While the driver is driving the vehicle, the environment detecting module on the vehicle detects data of the environment surrounding the vehicle in real-time and stores the data in the on-board memory. The driving environment data stored for the last preset duration is read from the on-vehicle memory. The environment detection module may include various sensors provided on the vehicle such as a vehicle-mounted camera, a laser radar, and a millimeter-wave radar. The corresponding driving environment data may include driving data such as an acquired environment image, a laser signal, a millimeter wave signal, etc.

The driving environment data detected by the environment detection module in real-time is processed, a target object that may collide with the vehicle is screened out among all the identified objects, and a second motion parameter of the target object is determined based on the driving environment data read within a preset duration. In an embodiment of the present disclosure, the second motion parameter may include a real-time speed and a real-time acceleration of the target object, and a position of the target object relative to the vehicle.

Step S3013, determining, based on a type of the target object, the safety margin.

In the embodiment of the present disclosure, the safety margin is a preset value, which is an allowable value set in advance based on the type of the target object indicating that the vehicle can avoid the target object. A correspondence table between the safety margin and the different types of obstacles is stored in advance in the vehicle-mounted memory. After the target object is determined, the corresponding relationship table stored in the vehicle-mounted memory is queried based on the type of the target object, and the safety margin corresponding to the target object is obtained. Types of obstacles may include non-stationary or stationary objects such as cars, trucks, buses, trailers, incomplete vehicles, motorcycles, pedestrians, cyclists, water barriers, roadblocks, tunnel walls, piers, and the like. The safety margin set for different types of target objects is generally different.

By the method according to the embodiments of the present disclosure, driving data is detected in real time by a detection device on a vehicle, and the motion parameters of the vehicle and a target object and a safety margin are determined based on the driving data to provide data support for subsequent decisions.

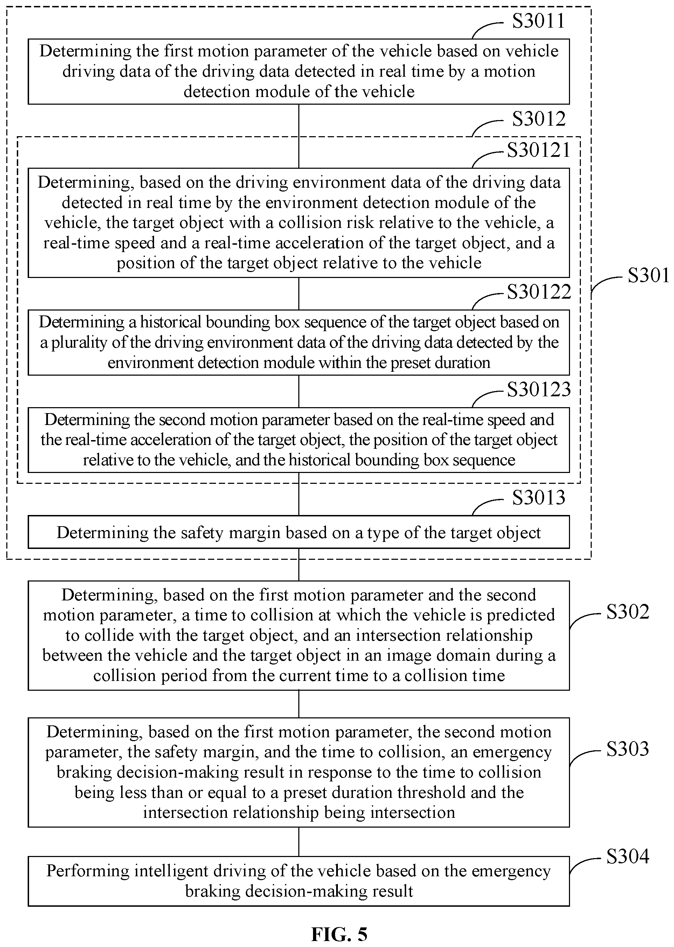

In some embodiments, on the basis of the above-mentioned embodiments, the step S3012 of determining, based on driving environment data of the driving data detected by an environment detection module of the vehicle within a preset duration, the target object with the collision risk relative to the vehicle and the second motion parameter of the target object may be implemented by the steps S30121 to S30123 shown in FIG. 5:

Step S30121, determining, based on the driving environment data of the driving data detected in real time by the environment detection module of the vehicle, the target object with a collision risk relative to the vehicle, a real-time speed and a real-time acceleration of the target object, and a position of the target object relative to the vehicle.

In some embodiments, the target object with a collision risk relative to the vehicle may be determined based on the following steps a to c:

Step a, the driving environment data detected by the environment detection module in real-time is pre-processed to obtain the environment perception information. Pre-processing may include processing steps such as data cleaning, type conversion, data noise reduction, data enhancement, data normalization, etc.

Step b, a plurality of obstacles affecting the normal running of the vehicle in the current running environment are identified by using the pre-trained target detection model to perform feature extraction, classification and identification processing and the like on the environment perception information. The obstacles may include movable objects such as vehicles, pedestrians, etc. that are running or parked at the roadside, and may also include stationary objects such as water barriers, roadblocks, tunnel walls, piers, etc.

Step c, a collision risk assessment is performed for respective obstacles to obtain collision risk assessment results for respective obstacles, and a target object is selected among obstacles based on the collision risk assessment results.

In some embodiments, the TTC at which the vehicle collides with respective obstacles may be calculated based on a TTC model. The smaller the TTC corresponding to the obstacle the higher the collision risk of the vehicle with the obstacle. The sizes of the TTC corresponding to respective obstacles are compared, and the obstacle with the smallest TTC is selected as the target object.

In other embodiments, the distance between the vehicle and respective obstacles may also be calculated based on a safe distance model. The smaller the distance between a plurality of obstacles in the same lane and the vehicle, the greater the possibility of collision, and the higher the collision risk. The distances corresponding to respective obstacles are compared, and the obstacle closest to the vehicle is selected as the target object.

In still other embodiments, the target object with a collision risk relative to the vehicle may also be determined in other ways, and the embodiments of the present disclosure are not limited in this respect.

After the target object is determined, a real-time speed and a real-time acceleration, and a position of the target object relative to the ego vehicle are determined based on the driving environment data detected in real time by the environment detection module. Note that, in the embodiment of the present disclosure, the real-time speed and the real-time acceleration of the ego vehicle, the real-time speed, the real-time acceleration and the relative position of the target object are vectors.

In an embodiment of the present disclosure, a target object at collision risk with a vehicle is determined based on driving environment data, and a real-time speed and a real-time acceleration of the target object, and a position of the target object relative the vehicle are determined to provide data support for subsequent decisions.

Step S30122, determining a historical bounding box sequence of the target object based on a plurality of the driving environment data of the driving data detected by the environment detection module within the preset duration.

Based on a plurality of driving environment data detected by the environment detection module during a historical period (preset duration), determining respective frame images acquired by a forward-view camera of vehicle 100 during the preset period as a first-person view (FPV) image. Then, the historical bounding boxes of the target object are determined from respective frame images, and the historical bounding box sequence of the target object is obtained by sorting in chronological order. In an embodiment, the historical bounding box sequence of the target object may be determined by the following steps d to f:

Step d, based on a plurality of driving environment data of the driving data detected by the environment detection module within a preset duration, a plurality of historical environment images are determined in the first-person view.

By processing image data in a plurality of driving environment data, a plurality of historical environment images acquired by a vehicle forward-view camera are determined, and a viewing angle corresponding to the plurality of historical environment images is FPV.

The historical bounding box sequence of the target object in the image in which the front view of the vehicle 100 is the first-person view (FPV) in the past period of time is determined based on the driving environment data.

Step e, respective historical environment images are identified, to determine a historical bounding box of the target object in respective historical environment images.

Location areas are identified where the target object is located in respective frames of the historical environment images, and a historical bounding box of the target object in respective historical environment images is obtained. The bounding box of the target object may be a contour line of the target object, may also be a circumscribed rectangular box of the contour line of the target object, and may also be other regular or irregular bounding box capable of characterizing the position of the target object.

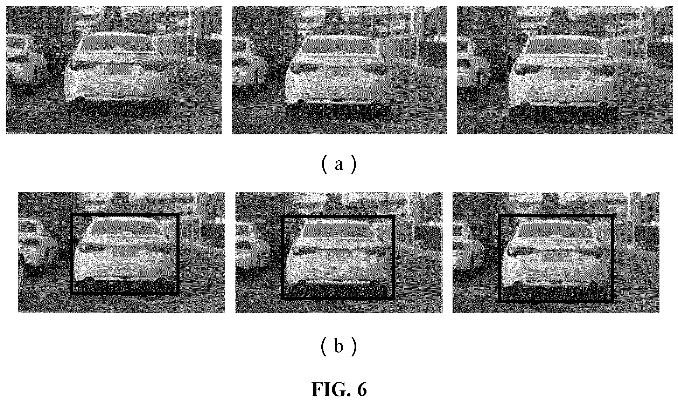

Illustratively, taking the case where the circumscribed rectangular box of the target object outline represents the bounding box of the target object as an example, (a) in FIG. 6 is a three frames of historical environment images that are continuous in time. By identifying each frame image, the position of the target object in each frame image is determined, and a historical bounding box of the target object in each frame historical environment image is obtained as shown in (b) of FIG. 6.

In step f, the historical bounding boxes of the target object in each of the historical environment images are sorted in chronological order to obtain the historical bounding box sequence.

The bounding boxes in respective images are sorted in chronological order, and the historical bounding box sequence of the target object in the image domain is obtained.

Step S30123, determining the second motion parameter based on the real-time speed and the real-time acceleration of the target object, the position of the target object relative to the vehicle, and the historical bounding box sequence.

The real-time speed and the real-time acceleration of the target object, the position of the target object relative to the vehicle, and the historical bounding box sequence are determined as the second motion parameter of the target object.

By the method according to the embodiments of the present disclosure , firstly a target object most likely to collide with an ego vehicle is determined based on driving environment data detected in real time by an environment detection module of a vehicle, and a real-time speed, a real-time acceleration of the target object and a position of the target object relative to the ego vehicle are determined, and then a historical bounding box sequence of the target object in an image domain is determined based on the driving environment data detected within a preset period of time before, so as to obtain a second motion parameter of the target object, for providing data support for subsequent decision-making in a numerical domain and an image domain.

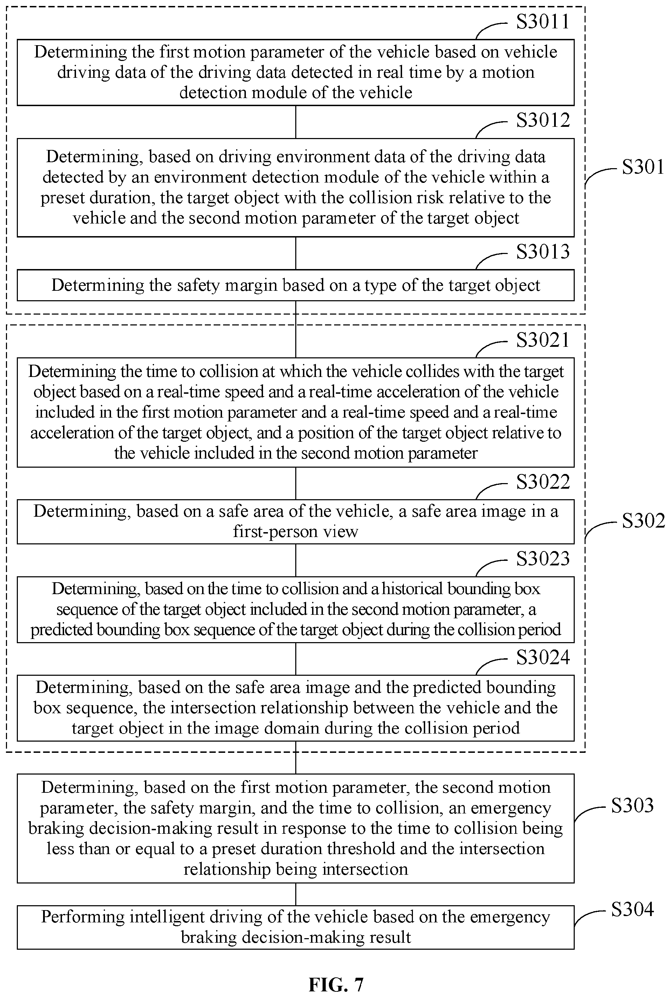

In some embodiments, on the basis of the above-mentioned embodiments, step S302 of determining, based on the first motion parameter and the second motion parameter, a time to collision at which the vehicle is predicted to collide with the target object, and an intersection relationship between the vehicle and the target object in an image domain during a collision period from the current time to a collision time can be realized by the step S3021 to the step S3024 shown in FIG. 7:

In step S3021, determining the time to collision at which the vehicle collides with the target object based on a real-time speed and a real-time acceleration of the vehicle included in the first motion parameter and a real-time speed and a real-time acceleration of the target object, and a position of the target object relative to the vehicle included in the second motion parameter.

illustratively, a first motion parameter of the vehicle in an embodiment of the present disclosure is denoted as $x_0 = (v_0, a_0)^T$, wherein $v_0$ represents the real-time speed of the vehicle and $a_0$ represents the real-time acceleration of the vehicle. The second motion parameter of the target object is denoted as $x_1 = (v_1, a_1, D)^T$, wherein, $v_1$ represents the real-time speed of the target object, $a_1$ represents the real-time acceleration of the target object, and $D$ represents the position of the target object relative to the vehicle. The time to collision TTC at which the vehicle collides with the target object can be calculated based on the following formula (1):

$$TTC = \frac{\sqrt{(v_0 - v_1)^2 + 2(a_0 - a_1) D} - (v_0 - v_1)}{a_0 - a_1} \tag{1};$$

In some embodiments, the TTC may be calculated by substituting the component in the X-axis direction (i.e. the longitudinal direction) of the ego vehicle coordinate system (also referred to the vehicle coordinate system), the longitudinal component of the real-time speed of the vehicle, the longitudinal component of the real-time acceleration of the vehicle, and the longitudinal component of the real-time speed of the target object, the longitudinal component of the real-time acceleration of the target object into the above equation (1) based on the position of the target object relative to the vehicle.

Note that, when the real-time accelerations of the vehicle and the target object are different (i.e., $a_0 \neq a_1$), TTC is calculated based on the above equation (1). When the accelerations of the vehicle and the target object are the same (i.e.,

$$TTC = \frac{D}{v_0 - v_1}$$

$a_0 = a_1$), the TTC can be calculated based on $\qquad$ .

Step S3022, determining, based on a safe area of the vehicle, a safe area image in a first-person view.

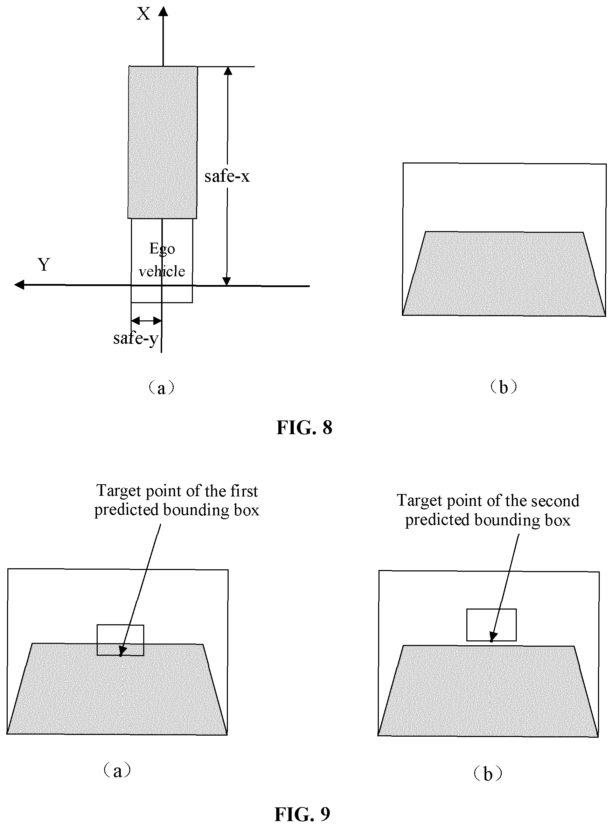

In the embodiments of the present disclosure, the safe area of the vehicle is defined as a forward-view safe area having a longitudinal length of safe-x and a lateral width of safe-y in the vehicle coordinate system, such as a shaded area shown in (a) of FIG. 8. Based on the mapping relationship between the vehicle coordinate system and the camera coordinate system of the forward-view camera, the vehicle safe area in the vehicle coordinate system as shown in (a) of FIG. 8 is transformed into the camera coordinate system to obtain the safe area image in the first-person view as shown in (b) of FIG. 8, and the safe area image corresponding to the safe area is a shaded area as shown in (b) of FIG. 8.

Step S3023, determining, based on the time to collision and a historical bounding box sequence of the target object included in the second motion parameter, a predicted bounding box sequence of the target object during the collision period.

The second motion parameter also includes a historical bounding sequence of the target object. Based on the TTC and the historical position sequence of the target object, a predicted bounding box sequence of the target object is determined during the collision period, namely, predicting a predicted bounding box of the target object in respective prediction images in the first-person view during the collision period based on the position boxes of the target object in respective historical environment images in the first-person view detected in the past preset duration. The predicted bounding boxes are sorted in chronological order to obtain a predicted bounding box sequence of the target object. The time to collision period is a time period between a current time and a collision time.

Step S3024, determining, based on the safe area image and the predicted bounding box sequence, the intersection relationship between the vehicle and the target object in the image domain during the collision period.

Determining whether the safe area image intersects with respective predicted bounding boxes in the predicted bounding box sequence, may be performed by determining whether a specific target point (such as a bottom edge midpoint) in the predicted bounding box is in the safe area image corresponding the safe area. As shown in (a) of FIG. 9, the target point of the first predicted bounding box falls within a safe area image (shaded area) corresponding the safe area, indicating that the vehicle and the target object intersect for a first time corresponding to the first predicted bounding box. As shown in (b) of FIG. 9, the target point of the second predicted bounding box falls outside the safe area image (shaded area), indicating that the vehicle and the target object do not intersect for the second time corresponding to the second predicted bounding box.

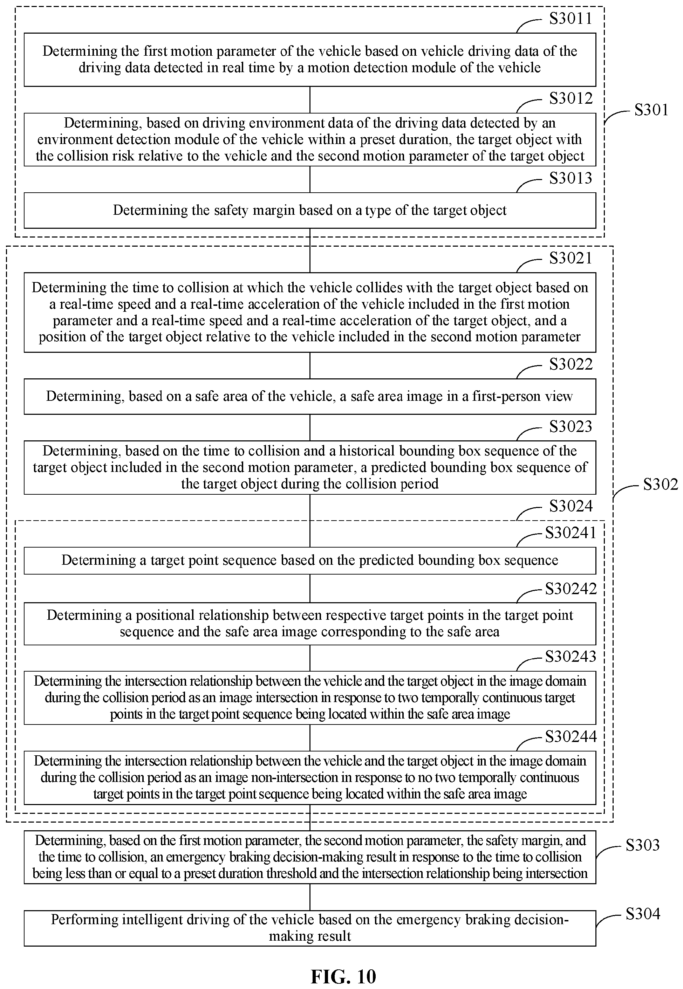

In an embodiment of the present disclosure, the intersection relationship of the vehicle and the target object in the image domain during the collision period may be determined by step S30241 to step S30244 shown in FIG. 10:

Step S30241, determining a target point sequence based on the predicted bounding box sequence.

Target points in respective predicted bounding boxes in the predicted bounding box sequence are determined successively to obtain a target point sequence, and each target point in the target point sequence corresponds to each predicted bounding box in the predicted bounding box sequence on a one-to-one basis.

Step S30242, determining a positional relationship between respective target points in the target point sequence and the safe area image corresponding to the safe area.

Whether respective target points in the target point sequence are located in a safe area image corresponding to the safe area is determined to obtain a position relationship between respective target points and the safe area image. The positional relationship includes that the target point being located within the safe area image and the target point being not located within the safe area image. And the target point being not located within the safe area image includes the target point being located outside the safe area image and the target point being located on boundaries of the safe area image.

Step S30243, determining the intersection relationship between the vehicle and the target object in the image domain during the collision period as an image intersection in response to two temporally continuous target points in the target point sequence being located within the safe area image.

It is considered that the vehicle and the target object intersect in the image domain during the collision period when there are two temporally continuous target points in the target point sequence located within the safe area image.

Two target points are exemplified in the embodiment of the present disclosure, and in practical applications when only one target point in a target point sequence is located within a safe area image, it can be considered that a vehicle and a target object intersect in an image domain during a collision period; it is also possible to consider that the vehicle and the target object intersect in the image domain during the collision period only when there are a plurality (more than 2) of temporally continuous target points in the target point sequence located within the safe area image. That is to say, there is a collision risk between the vehicle and the target object. In practice, an appropriate number of target points may be selected based on an actual driving scene to determine whether the target points intersect or not, and the embodiments of the present disclosure are not limited thereto.

Step S30244, determining the intersection relationship between the vehicle and the target object in the image domain during the collision period as an image non-intersection in response to no two temporally continuous target points in the target point sequence being located within the safe area image.

It is considered that the vehicle and the target object do not intersect in the image domain during the collision period when there are no two temporally continuous target points in the target point sequence located within the safe area image.

In the embodiments of the present disclosure, the predicted bounding box sequence of the target object during the collision period is predicted based on the historical bounding box sequence of the target object during the historical period, the intersection relationship between the vehicle and the target object in the image domain is determined based on the intersection relationship between the predicted bounding box sequence and the FPV safe area image corresponding to the safe area, for providing the data support of the image domain for the decision.

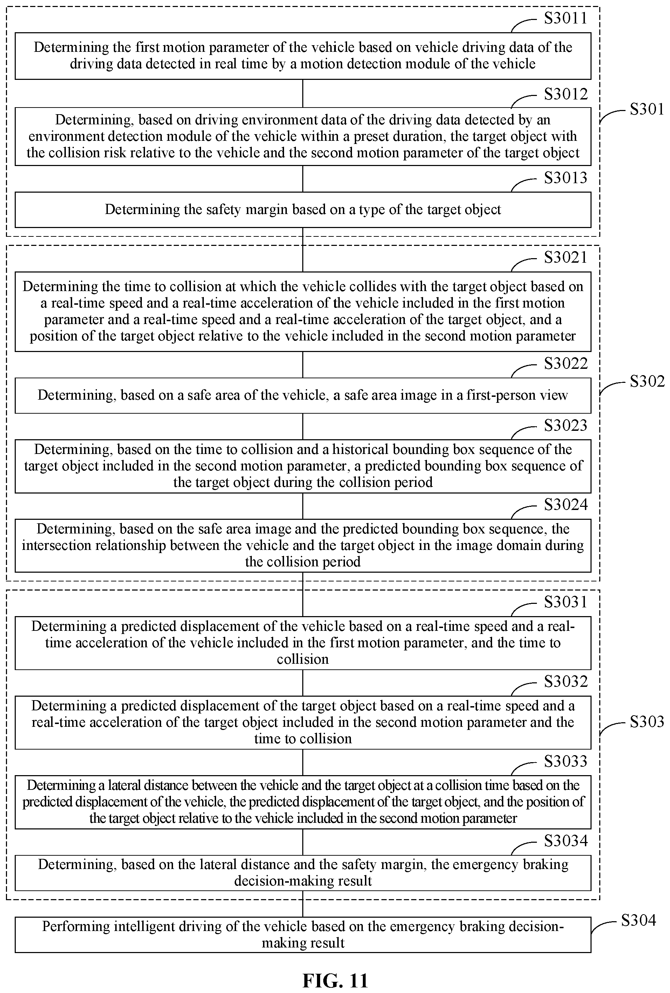

In some embodiments, on the basis of the above-mentioned embodiments, step S303 of determining, based on the first motion parameter, the second motion parameter, the safety margin, and the time to collision, an emergency braking decision-making result in response to the time to collision being less than or equal to a preset duration threshold and the intersection relationship being intersection can be implemented by step S3031 to step S3034 shown in FIG. 11: Step S3031, determining a predicted displacement of the vehicle based on a real-time speed and a real-time acceleration of the vehicle included in the first motion parameter, and the time to collision.

The real-time speed $v_0$ of the vehicle, the real-time acceleration $a_0$ of the vehicle, and the time to collision TTC are determined, and the predicted displacement $S_0$ of the vehicle can be calculated based on the following equation (2):

$$S_0 = v_0 * TTC + \frac{1}{2} a_0 * TTC^2$$

(2).

Step S3032, determining a predicted displacement of the target object based on a real-time speed and a real-time acceleration of the target object included in the second motion parameter and the time to collision.

The real-time speed $v_1$ of the target object, the real-time acceleration $a_1$ of the target object, and the time to collision TTC are determined, and the predicted displacement $S_1$ of the vehicle can be calculated based on the following equation (3):

$$S_1 = v_1 * TTC + \frac{1}{2} a_1 * TTC^2$$

(3).

Step S3033, determining a lateral distance between the vehicle and the target object at a collision time based on the predicted displacement of the vehicle, the predicted displacement of the target object, and the position of the target object relative to the vehicle included in the second motion parameter.

A component (denoted as $S_{y0}$) of the predicted displacement $S_0$ of the vehicle in the Y-axis direction (i.e. the lateral direction) in the vehicle coordinate system, a component (denoted as $S_{y1}$) of the predicted displacement $S_1$ of the target object in the Y-axis direction, and a component (denoted as $D_y$) of the position $D$ of the target object relative to the vehicle in the Y-axis direction are determined, and the lateral distance $d_y$ between the vehicle and the target object at the collision time is predicted based on the following equation (4):

$$d_y = D + S_{y0} + S_{y1} \tag{4};$$

Note that, $S_{y0}$, $S_{y1}$ and $D$ are vectors, and when $S_{y0}$ is a positive value, it indicates that the vehicle is running to the left, when $S_{y0}$ is a negative value, it indicates that the vehicle is running to the right, and when $S_{y0}$ is 0, it indicates that the vehicle is running straight; similarly, when $S_{y1}$ is a positive value, it indicates that the target object is running to the left, when $S_{y1}$ is a negative value, it indicates that the target object is running to the right, and when $S_{y1}$ is 0, it indicates that the target object is running straight. When the component of $D$ in the Y-axis direction in the vehicle coordinate system is a positive value, it can be determined that the target object is left in front of the vehicle, when the component of $D$ in the Y-axis direction in the vehicle coordinate system is a negative value, it can be determined that the target object is right in front of the vehicle, and when the component of $D$ in the Y-axis direction in the vehicle coordinate system is 0, it can be determined that the target object is right in front of the vehicle.

Step S3034, determining, based on the lateral distance and the safety margin, the emergency braking decision-making result.

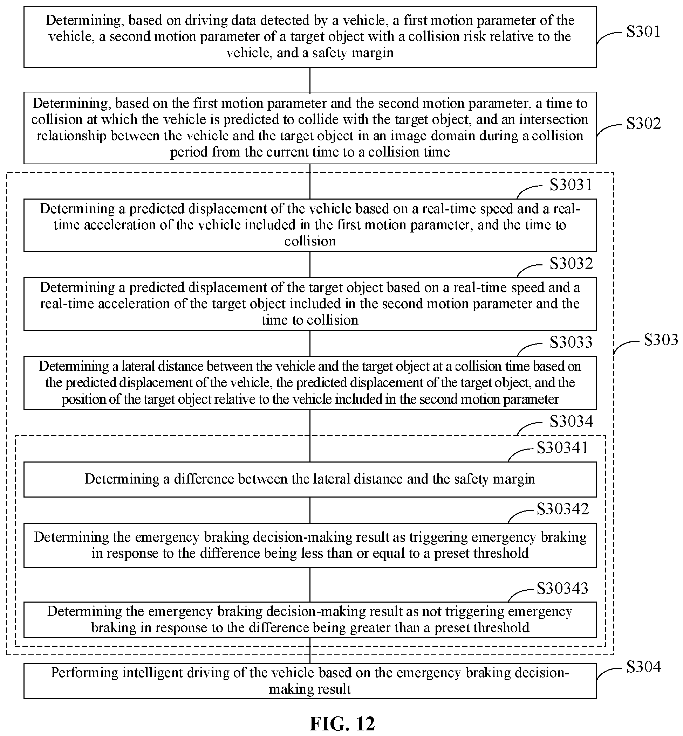

In an embodiment of the present disclosure, the emergency braking decision-making result may be implemented by step S30341 to step S30343 shown in FIG. 12:

Step S30341, determining a difference between the lateral distance and the safety margin.
Step S30342, determining the emergency braking decision-making result as triggering emergency braking in response to the difference being less than or equal to a preset threshold.
Step S30343, determining the emergency braking decision-making result as not triggering emergency braking in response to the difference being greater than a preset threshold.

Illustratively, in one embodiment, the preset threshold may be 0. Comparing the magnitude of the lateral distance and the safety margin, when the difference between the lateral distance and the safety margin is less than or equal to the prediction threshold, i.e. the lateral distance is less than or equal to the safety margin, it is considered that the sensing recognition is correct; if effective measures are not taken, the vehicle and the target object will collide at the calculated time to collision, and thus the autonomous emergency braking needs to be triggered; at this time, the emergency braking decision-making result is determined as triggering the emergency braking. When the difference between the lateral distance and the safety margin is greater than the prediction threshold, i.e. the lateral distance is greater than the safety margin, it is considered that the sensing recognition is incorrect, the vehicle and the target object will not collide at the calculated time to collision, and there is no need to trigger the autonomous emergency braking, and at this time, the emergency braking decision-making result is determined as not triggering the emergency braking.

In practical applications, the prediction threshold may also be other preset values, and the embodiments of the present disclosure are not limited thereto.

By the method according to the embodiments of the present disclosure, a lateral distance between a vehicle and a target object is predicted at the time of collision and an emergency braking decision-making result is determined by the lateral distance and a safety margin. When it is determined that the emergency braking function needs to be triggered based on the lateral distance and the safety margin, the emergency braking decision-making result is determined as triggering the emergency braking; when it is determined that it is not necessary to trigger the emergency braking function based on the lateral distance and the safety margin, it is determined that the emergency braking decision-making result is not triggering the emergency braking, which can reduce the false triggering of the AEB system, ensure that the AEB system triggers the emergency braking function in an emergency, and can improve the accuracy of decision-making.

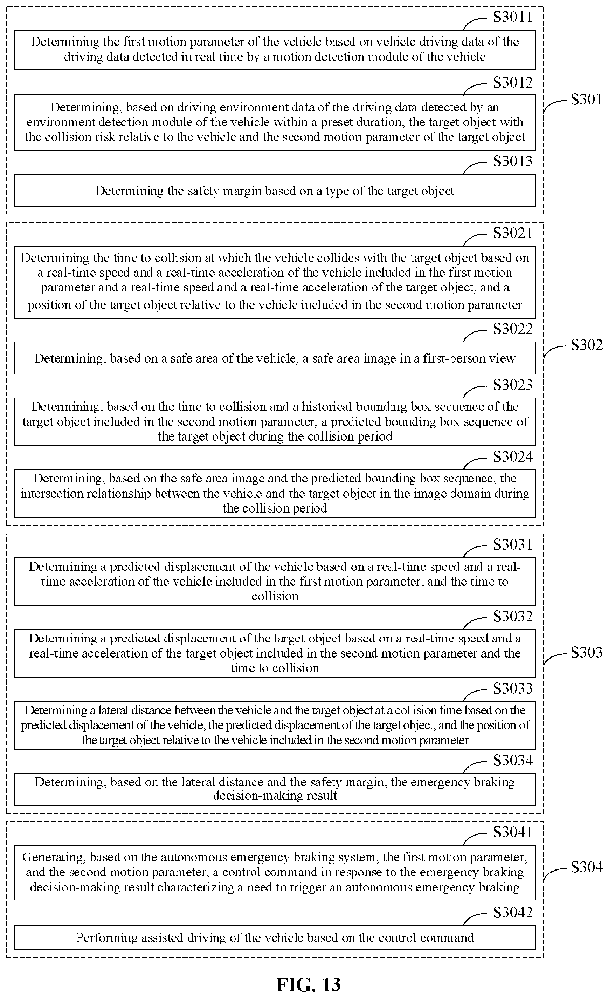

In some embodiments, on the basis of the above-described embodiment, the step S304 of performing intelligent driving of the vehicle based on the emergency braking decision-making result may be implemented by the step S3041 and the step S3042 shown in FIG. 13:

Step S3041, generating, based on the autonomous emergency braking system, the first motion parameter, and the second motion parameter, a control command in response to the emergency braking decision-making result characterizing a need to trigger an autonomous emergency braking.

A control command may be generated based on the TTC determined by the first motion parameter, the second motion parameter and a preset duration threshold of the AEB system when the emergency braking decision-making result characterizing a need to trigger autonomous emergency braking. Specifically, the magnitude of the TTC and the preset duration threshold are compared, and a corresponding control command is generated based on the comparison result.

In some embodiments, the preset duration thresholds may include a first preset duration threshold for triggering an alarm, a second preset duration threshold for triggering partial braking, and a third preset duration threshold for triggering full braking. An exemplary first preset duration threshold $TTC_1$ may be 2.6 s, a second preset duration threshold $TTC_2$ may be 1.6 s, and a third preset duration threshold $TTC_3$ may be 0.6 s.

Compare the TTC calculated from Equation (1) with the values of $TTC_1$, $TTC_2$ and $TTC_3$, and when $TTC \leq TTC_1$, an alert command is generated; when $TTC \leq TTC_2$, a partial braking command is generated; and when $TTC \leq TTC_3$, a full braking command is generated.

In step S3042, performing assisted driving of the vehicle based on the control command.

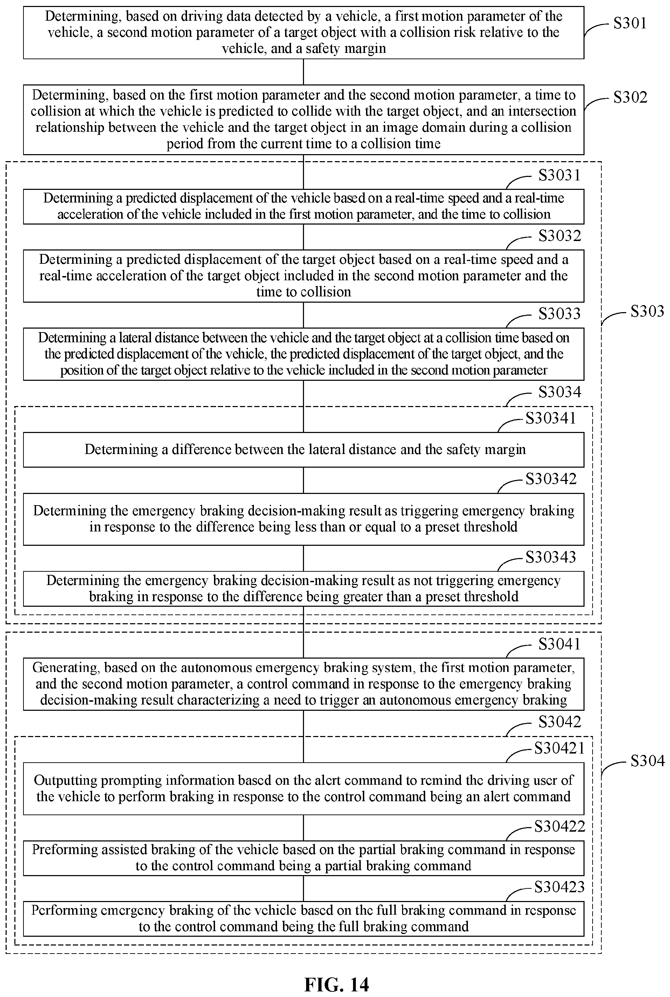

On the basis of the above-mentioned embodiment, this step can be realized by step S30421 to step S30423 shown in FIG. 14:

Step S30421, outputting prompting information based on the alert command to remind the driving user of the vehicle to perform braking in response to the control command being an alert command.

It is determined that emergency braking needs to be triggered based on the numerical value domain, the image domain, and the safety margin, and when the generated control command is an alert command, an alert prompt is sent to the driver (namely, a driving user of the vehicle) through a warning such as a sound and an icon, so as to remind the driver to perform braking and avoid the collision between the vehicle and the target object.

Step S30422, performing assisted braking of the vehicle based on the partial braking command in response to the control command being a partial braking command.

When the generated control command is a partial braking command, a partial braking force is applied to slow down the speed and remind the driver to perform braking, thereby reducing the probability of collision between the vehicle and the target object.

Step S30423, performing emergency braking of the vehicle based on the full braking command in response to the control command being the full braking command.

When the generated control command is a full braking command, all of the braking force is applied to rapidly reduce the speed, thereby reducing the loss of collision between the vehicle and the target object.

By the method according to the embodiments of the present disclosure, different control commands are generated based on an emergency level to assist driving of a vehicle based on an alert command or a partial braking command or a full braking command when it is determined that emergency braking needs to be triggered to assist driving of the vehicle, thereby reducing a probability of the vehicle colliding with a forward obstacle, reducing collision loss and improving driving safety.

Exemplary device

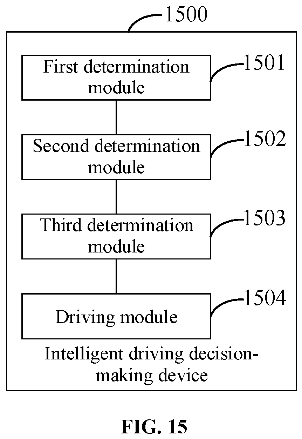

FIG. 15 is a schematic diagram of the constitutional structure of an intelligent driving decision-making device according to an exemplary embodiment of the present disclosure. As shown in FIG. 15, the intelligent driving decision-making device 1500 may include:

a first determination module 1501, configured for determining, based on driving data detected by a vehicle, a first motion parameter of the vehicle, a second motion parameter of a target object with a collision risk relative to the vehicle, and a safety margin;

a second determination module 1502, configured for determining, based on the first motion parameter and the second motion parameter, a time to collision at which the vehicle is predicted to collide with the target object, and an intersection relationship between the vehicle and the target object in an image domain during a collision period from the current time to a collision time;

a third determination module 1503, configured for determining, based on the first motion parameter, the second motion parameter, the safety margin, and the time to collision, an emergency braking decision-making result in response to the time to collision being less than or equal to a preset duration threshold and the intersection relationship being an intersection;

a driving module 1504, configured for performing intelligent driving of the vehicle based on the emergency braking decision-making result.

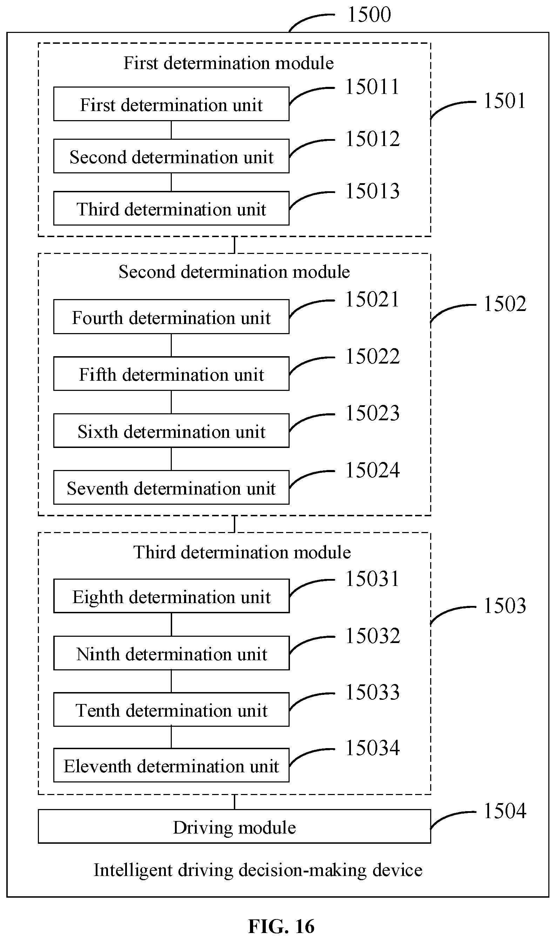

Referring to FIG. 16, in some embodiments, the first determination module 1501, may include:

a first determination unit 15011, configured for determining the first motion parameter of the vehicle based on vehicle driving data of the driving data detected in real time by a motion detection module of the vehicle;
a second determination unit 15012, configured for determining, based on driving environment data of the driving data detected by an environment detection module of the vehicle within a preset duration, the target object with a collision risk relative to the vehicle and a second motion parameter of the target object;
a third determination unit 15013, configured for determining, based on a type of the target object, the safety margin.

In some embodiments, the second determination unit 15012, may include:

a first determination subunit, configured for determining, based on the driving environment data of the driving data detected in real time by the environment detection module of the vehicle, the target object with a collision risk relative to the vehicle, and a real-time speed and a real-time acceleration of the target object, and a position of the target object relative to the vehicle;
a second determination subunit, configured for determining a historical bounding box sequence of the target object based on a plurality of the driving environment data of the driving data detected by the environment detection module within the preset duration;
a third determination subunit, configured for determining the second motion parameter based on the real-time speed and the real-time acceleration of the target object, a relative position of the target object, and the historical bounding box sequence.

In some embodiments, the second determination subunit, in particular, may be used for: determining a plurality of historical environment images in a first-person view based on a plurality of driving environment data of the driving data detected by the environment detection module within the preset duration; identifying the respective historical environment images, and determining historical bounding boxes of the target object in the respective historical environment images; and sorting the historical bounding boxes of the target object in the respective historical environment images in chronological order to obtain the historical bounding box sequence.

Referring to FIG. 16, in some embodiments, the second determination module 1502, may include:

a fourth determination unit 15021, configured for determining the time to collision at which the vehicle collides with the target object based on a real-time speed and a real-time acceleration of the vehicle included in the first motion parameter, and a real-time speed and a real-time acceleration of the target object, and a position of the target object relative to the vehicle included in the second motion parameter;
a fifth determination unit 15022, configured for determining, based on a safe area of the vehicle, a safe area image in a first-person view;
a sixth determination unit 15023, configured for determining a predicted bounding box sequence of the target object during the collision period based on the time to collision and a historical bounding box sequence of the target object included in the second motion parameter;
a seventh determination unit 15024, configured for determining, based on the safe area image and the predicted bounding box sequence, the intersection relationship between the vehicle and the target object in the image domain during the collision period.

In some embodiments, the seventh determination unit 15024 may include:

a fourth determination subunit, configured for determining a target point sequence based on the predicted bounding box sequence;
a fifth determination subunit, configured for determining a positional relationship between respective target points in the target point sequence and the safe area image corresponding to the safe area;
a sixth determination subunit, configured for determining an intersection relationship between the vehicle and the target object in an image domain during the collision period as image intersection in response to two temporally continuous target points in the target points sequence located within the safe area image;
a seventh determination subunit, configured for determining an intersection relationship between the vehicle and the target object in an image domain during the collision period as image non-intersection in response to no two temporally continuous target points in the target point sequence being located within the safe area image.

Referring to FIG. 16, in some embodiments, the third determination module 1503, may include:

an eighth determination unit 15031, configured for determining a predicted displacement of the vehicle based on a real-time speed and a real-time acceleration of the vehicle included in the first motion parameter, and the time to collision;

a ninth determination unit 15032, configured for determining a predicted displacement of the target object based on the real-time speed and the real-time acceleration of the target object included in the second motion parameter and the time to collision;

a tenth determination unit 15033, configured for determining a lateral distance between the vehicle and the target object at a collision time based on the predicted displacement of the vehicle, the predicted displacement of the target object, and the position of the target object relative to the vehicle included in the second motion parameter;

an eleventh determination unit 15034, configured for determining the emergency braking decision-making result based on the lateral distance and the safety margin.

In some embodiments, the eleventh determination unit 15034, may include:

an eighth determination subunit, configured for determining a difference between the lateral distance and the safety margin;

a ninth determination subunit, configured for determining the emergency braking decision-making result as triggering emergency braking in response to the difference being less than or equal to a preset threshold;

a tenth determination subunit, configured for determining the emergency braking decision-making result as not triggering emergency braking in response to the difference being greater than a preset threshold.

Advantageous effects corresponding to the exemplary embodiments of the device of the present disclosure can be seen in the respective advantageous effects of the exemplary method section described above, and will not be described in detail herein.

Exemplary electronic device

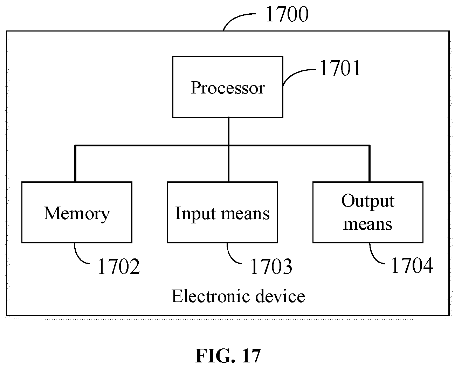

FIG. 17 is a schematic diagram of a constitutional structure of electronic device according to an exemplary embodiment of the present disclosure, as shown in FIG. 17, the electronic device 1700 includes at least one processor 1701 and memory 1702.

The processor 1701 may be a central processing unit (CPU) or other form of processing unit having data processing capabilities and/or instruction execution capabilities and may control other components in the electronic device 1700 to perform desired functions.

Memory 1702 may include one or more computer program products, which may include various forms of computer-readable storage media, such as volatile memory and/or non-volatile memory. Volatile memory can include, for example, random access memory (RAM) and/or cache memory (cache), etc. The non-volatile memory may include, for example, a read-only memory (ROM), a hard disk, a flash memory, etc. One or more computer program instructions may be stored on the computer-readable storage medium, and the processor 1701 may execute the one or more computer program instructions to implement the intelligent driving decision-making method and/or other desired functions according to the various embodiments of the present disclosure above.

In one example, the electronic device 1700 may further include: input means 1703 and output means 1704, which are interconnected by a bus system and/or other form of connection mechanism (not shown).

The input means 1703 may also include, for example, a keyboard, a mouse, and the like.

The output means 1704 may output various information to the outside, which may include, for example, a display, a speaker, a printer, a communication network, and a remote output equipment to which it is connected, etc.

Of course, for simplicity, only some of the components of the electronic device 1700 relevant to the present disclosure are shown in FIG. 17, omitting components such as buses, input/output interfaces, and the like. In addition, the electronic device 1700 may include any other suitable components, depending on the particular application.

Exemplary computer program product and computer-readable storage medium

In addition to the methods and apparatus described above, in the embodiments of the present disclosure, there may also be provided a computer program product including computer program instructions which, when executed by a processor, cause the processor to perform the steps in the intelligent driving decision-making method of various embodiments of the present disclosure described in the "Exemplary Methods" section above.

The computer program product may include program code for carrying out operations of embodiments of the present disclosure written in any combination of one or more programming languages, including object-oriented programming languages, such as Java, C++, etc., and conventional procedural programming languages, such as the "C" language or similar programming languages. The program code may execute entirely on the user computing device, partially on the user device, as a stand-alone software package, partially on the user computing device, partially on a remote computing device, or entirely on the remote computing device or server.

In addition, in the embodiments of the present disclosure, there may also be provided a computer-readable storage medium having stored thereon computer program instructions which, when executed by a processor, cause the processor to perform the steps in the intelligent driving decision-making method of various embodiments of the present disclosure as described in the "Exemplary Methods" section above.

The computer-readable storage medium may take any combination of one or more of the readable media. The readable medium may be a readable signal medium or a readable storage medium. A readable storage medium is exemplified by, but not limited to, a system, apparatus, or device including an electronic, magnetic, optical, electromagnetic, infrared, or semiconductor device, or a combination of any of the foregoing. More specific examples (a non-exhaustive list) of the readable storage medium include: An electrical connection having one or more wires, a portable disk, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

While the general principles of the present disclosure have been described above in connection with specific embodiments, the advantages, merits, effects, and the like set forth in the present disclosure are merely exemplary and not limiting, and are not to be construed as necessarily required by the various embodiments of the present disclosure. Furthermore, the particular details disclosed above are for purposes of illustration and understanding only and are not intended to be limiting, and the disclosure is not limited to the particular details disclosed above as they may be necessary to implement the disclosure.

Various modifications and alterations of this disclosure may be made by those skilled in the art without departing from the spirit and scope of this application. Thus, it is intended that the present disclosure cover the modifications and variations of this application provided they come within the scope of the appended claims and their equivalents.

**Claims**

**1.** An intelligent driving decision-making method, **characterized by** comprising:

> determining (S301), based on driving data detected by a vehicle, a first motion parameter of the vehicle, a second motion parameter of a target object with a collision risk relative to the vehicle, and a safety margin;
> determining (S302), based on the first motion parameter and the second motion parameter, a time to collision at which the vehicle is predicted to collide with the target object, and an intersection relationship between the vehicle and the target object in an image domain during a collision period from the current time to a collision time;
> determining (S303), based on the first motion parameter, the second motion parameter, the safety margin, and the time to collision, an emergency braking decision-making result in response to the time to collision being less than or equal to a preset duration threshold and the intersection relationship being intersection; and
> performing (S304) intelligent driving of the vehicle based on the emergency braking decision-making result.

**2.** The method according to claim 1, wherein the determining (S301), based on driving data detected by a vehicle, a first motion parameter of the vehicle, a second motion parameter of a target object with a collision risk relative to the vehicle, and a safety margin comprises:

> determining (S3011) the first motion parameter of the vehicle based on vehicle driving data of the driving data detected in real time by a motion detection module of the vehicle;
> determining (S3012), based on driving environment data of the driving data detected by an environment detection module of the vehicle within a preset duration, the target object with a collision risk relative to the vehicle and the second motion parameter of the target object; and
> determining (S3013), based on a type of the target object, the safety margin.

**3.** The method according to claim 2, wherein the determining (S3012), based on driving environment data of the driving data detected by an environment detection module of the vehicle within a preset duration, the target object with the collision risk relative to the vehicle and the second motion parameter of the target object comprises:

> determining (S30121), based on the driving environment data of the driving data detected in real time by the environment detection module of the vehicle, the target object with a collision risk relative to the vehicle, a real-time speed and a real-time acceleration of the target object, and a position of the target object relative to the vehicle;
> determining (S30122) a historical bounding box sequence of the target object based on a plurality of the driving environment data of the driving data detected by the environment detection module within the preset duration; and

determining (S30123) the second motion parameter based on the real-time speed and the real-time acceleration of the target object, the position of the target object relative to the vehicle, and the historical bounding box sequence.

4. **The** method according to claim 3, wherein the determining (S30122) a historical bounding box sequence of the target object based on a plurality of the driving environment data of the driving data detected by the environment detection module within the preset duration comprises:

determining, based on the plurality of driving environment data of the driving data detected by the environment detection module within the preset duration, a plurality of historical environment images in a first-person view; identifying respective historical environment images, to determine historical bounding boxes of the target object in the respective historical environment images; and sorting the historical bounding boxes of the target object in the respective historical environment images in chronological order to obtain the historical bounding box sequence.

5. The method according to any one of claims 1 to 4, wherein the determining (S302), based on the first motion parameter and the second motion parameter, a time to collision at which the vehicle is predicted to collide with the target object, and an intersection relationship between the vehicle and the target object in an image domain during a collision period from the current time to a collision time comprises:

determining (S3021) the time to collision at which the vehicle is predicted to collide with the target object based on a real-time speed and a real-time acceleration of the vehicle included in the first motion parameter, and a real-time speed and a real-time acceleration of the target object, and a position of the target object relative to the vehicle included in the second motion parameter; determining (S3022), based on a safe area of the vehicle, a safe area image in a first-person view; determining (S3023), based on the time to collision and a historical bounding box sequence of the target object included in the second motion parameter, a predicted bounding box sequence of the target object during the collision period; and determining (S3024), based on the safe area image and the predicted bounding box sequence, the intersection relationship between the vehicle and the target object in the image domain during the collision period.

6. The method according to claim 5, wherein the determining (S3024), based on the safe area image and the predicted bounding box sequence, the intersection relationship between the vehicle and the target object in the image domain during the collision period comprises:

determining (S30241) a target point sequence based on the predicted bounding box sequence; determining (S30242) a positional relationship between respective target points in the target point sequence and the safe area image corresponding to the safe area; determining (S30243) the intersection relationship between the vehicle and the target object in the image domain during the collision period as an image intersection in response to two temporally continuous target points in the target point sequence being located within the safe area image; and determining (S30244) the intersection relationship between the vehicle and the target object in the image domain during the collision period as an image non-intersection in response to no two temporally continuous target points in the target point sequence being located within the safe area image.

7. The method according to any one of claims 1 to 6, wherein the determining (S303), based on the first motion parameter, the second motion parameter, the safety margin, and the time to collision, an emergency braking decision-making result comprises:

determining (S3031) a predicted displacement of the vehicle based on a real-time speed and a real-time acceleration of the vehicle included in the first motion parameter, and the time to collision; determining (S3032) a predicted displacement of the target object based on a real-time speed and a real-time acceleration of the target object included in the second motion parameter and the time to collision; determining (S3033) a lateral distance between the vehicle and the target object at a collision time based on the predicted displacement of the vehicle, the predicted displacement of the target object, and the position of the target object relative to the vehicle included in the second motion parameter; and determining (S3034), based on the lateral distance and the safety margin, the emergency braking decision-making result.

8. The method according to claim 7, wherein the determining (S3034), based on the lateral distance and the safety margin, the emergency braking decision-making result comprises:

determining (S30341) a difference between the lateral distance and the safety margin;
determining (S30342) the emergency braking decision-making result as triggering emergency braking in response to the difference being less than or equal to a preset threshold; and
determining (S30343) the emergency braking decision-making result as not triggering emergency braking in response to the difference being greater than a preset threshold.

9. An intelligent driving decision-making apparatus (1500), **characterized by** comprising:

a first determination module (1501), configured for determining, based on driving data detected by a vehicle, a first motion parameter of the vehicle, a second motion parameter of a target object with a collision risk relative to the vehicle, and a safety margin;
a second determination module (1502), configured for determining, based on the first motion parameter and the second motion parameter, a time to collision at which the vehicle is predicted to collide with the target object, and an intersection relationship between the vehicle and the target object in an image domain during a collision period from the current time to a collision time;
a third determination module (1503), configured for determining, based on the first motion parameter, the second motion parameter, the safety margin, and the time to collision, an emergency braking decision-making result in response to the time to collision being less than or equal to a preset duration threshold and the intersection relationship being intersection; and
a driving module (1504), configured for performing intelligent driving of the vehicle based on the emergency braking decision-making result.

10. The apparatus according to claim 9, wherein the first determination module (1501) comprises:

a first determination unit (15011), configured for determining the first motion parameter of the vehicle based on vehicle driving data of the driving data detected in real time by a motion detection module of the vehicle;
a second determination unit (15012), configured for determining, based on driving environment data of the driving data detected by an environment detection module of the vehicle within a preset duration, the target object with a collision risk relative to the vehicle and a second motion parameter of the target object; and
a third determination unit (15013), configured for determining, based on a type of the target object, the safety margin.

11. The apparatus according to claim 10, wherein the second determination unit (15012) comprises:

a first determination subunit, configured for determining, based on the driving environment data of the driving data detected in real time by the environment detection module of the vehicle, the target object with a collision risk relative to the vehicle, and a real-time speed and a real-time acceleration of the target object, and a position of the target object relative to the vehicle;
a second determination subunit, configured for determining a historical bounding box sequence of the target object based on a plurality of the driving environment data of the driving data detected by the environment detection module within the preset duration; and
a third determination subunit, configured for determining the second motion parameter based on the real-time speed and the real-time acceleration of the target object, a relative position of the target object, and the historical bounding box sequence.

12. The apparatus according to claim 9, wherein the second determination module (1502) comprises:

a fourth determination unit (15021), configured for determining the time to collision at which the vehicle collides with the target object based on a real-time speed and a real-time acceleration of the vehicle included in the first motion parameter, and a real-time speed and a real-time acceleration of the target object, and a position of the target object relative to the vehicle included in the second motion parameter;
a fifth determination unit (15022), configured for determining, based on a safe area of the vehicle, a safe area image in a first-person view;
a sixth determination unit (15023), configured for determining a predicted bounding box sequence of the target object during the collision period based on the time to collision and a historical bounding box sequence of the target object included in the second motion parameter; and

a seventh determination unit (15024), configured for determining, based on the safe area image and the predicted bounding box sequence, the intersection relationship between the vehicle and the target object in the image domain during the collision period.

13. The apparatus according to claim 9, wherein the third determination module (1503), may include:

an eighth determination unit (15031), configured for determining a predicted displacement of the vehicle based on a real-time speed and a real-time acceleration of the vehicle included in the first motion parameter, and the time to collision;

a ninth determination unit (15032), configured for determining a predicted displacement of the target object based on the real-time speed and the real-time acceleration of the target object included in the second motion parameter and the time to collision;

a tenth determination unit (15033), configured for determining a lateral distance between the vehicle and the target object at a collision time based on the predicted displacement of the vehicle, the predicted displacement of the target object, and the position of the target object relative to the vehicle included in the second motion parameter; and

an eleventh determination unit (15034), configured for determining the emergency braking decision-making result based on the lateral distance and the safety margin.

14. A computer-readable storage medium, **characterized by** storing a computer program thereon, which, when executed by a processor, causes the processor to implement the intelligent driving decision-making method according to any one of claims 1 to 8.

15. An electronic device, **characterized by** comprising:

a processor; and

a memory for storing the processor-executable instructions;

wherein the processor is configured for reading the instructions from the memory and executing the instructions to implement the intelligent driving decision-making method according to any one of claims 1 to 8.

Driving direction

Other vehicle
200-1

Other vehicle
200-2

Other vehicle
200-4

Vehicle
100

Other vehicle
200-3

**FIG. 1**

Intelligent driving decision-making system

101

**Detection device**

1011

Motion
detection
module

1012

Environment
detection
module

102

**Decision-making device**

1021

Numerical domain
calculation module

1022

Image domain
reasoning module

1023

Verification
module

1024

Emergency
braking
decision-
making
module

103

Execution
device

**FIG. 2**

Determining, based on driving data detected by a vehicle, a first motion parameter of the vehicle, a second motion parameter of a target object with a collision risk relative to the vehicle, and a safety margin ⟋ S301

Determining, based on the first motion parameter and the second motion parameter, a time to collision at which the vehicle is predicted to collide with the target object, and an intersection relationship between the vehicle and the target object in an image domain during a collision period from the current time to a collision time ⟋ S302

Determining, based on the first motion parameter, the second motion parameter, the safety margin, and the time to collision, an emergency braking decision-making result in response to the time to collision being less than or equal to a preset duration threshold and the intersection relationship being intersection ⟋ S303

Performing intelligent driving of the vehicle based on the emergency braking decision-making result ⟋ S304

FIG. 3

Determining the first motion parameter of the vehicle based on vehicle driving data of the driving data detected in real time by a motion detection module of the vehicle — S3011

Determining, based on driving environment data of the driving data detected by an environment detection module of the vehicle within a preset duration, the target object with the collision risk relative to the vehicle and the second motion parameter of the target object — S3012

Determining the safety margin based on a type of the target object — S3013

— S301

Determining, based on the first motion parameter and the second motion parameter, a time to collision at which the vehicle is predicted to collide with the target object, and an intersection relationship between the vehicle and the target object in an image domain during a collision period from the current time to a collision time — S302

Determining, based on the first motion parameter, the second motion parameter, the safety margin, and the time to collision, an emergency braking decision-making result in response to the time to collision being less than or equal to a preset duration threshold and the intersection relationship being intersection — S303

Performing intelligent driving of the vehicle based on the emergency braking decision-making result — S304

**FIG. 4**

S3011

Determining the first motion parameter of the vehicle based on vehicle driving data of the driving data detected in real time by a motion detection module of the vehicle

S3012

S30121

Determining, based on the driving environment data of the driving data detected in real time by the environment detection module of the vehicle, the target object with a collision risk relative to the vehicle, a real-time speed and a real-time acceleration of the target object, and a position of the target object relative to the vehicle

S301

S30122

Determining a historical bounding box sequence of the target object based on a plurality of the driving environment data of the driving data detected by the environment detection module within the preset duration

S30123

Determining the second motion parameter based on the real-time speed and the real-time acceleration of the target object, the position of the target object relative to the vehicle, and the historical bounding box sequence

S3013

Determining the safety margin based on a type of the target object

Determining, based on the first motion parameter and the second motion parameter, a time to collision at which the vehicle is predicted to collide with the target object, and an intersection relationship between the vehicle and the target object in an image domain during a collision period from the current time to a collision time

S302

Determining, based on the first motion parameter, the second motion parameter, the safety margin, and the time to collision, an emergency braking decision-making result in response to the time to collision being less than or equal to a preset duration threshold and the intersection relationship being intersection

S303

Performing intelligent driving of the vehicle based on the emergency braking decision-making result

S304

**FIG. 5**

( a )

( b )

FIG. 6

S3011

Determining the first motion parameter of the vehicle based on vehicle driving data of the driving data detected in real time by a motion detection module of the vehicle

S3012

Determining, based on driving environment data of the driving data detected by an environment detection module of the vehicle within a preset duration, the target object with the collision risk relative to the vehicle and the second motion parameter of the target object

S301

S3013

Determining the safety margin based on a type of the target object

S3021

Determining the time to collision at which the vehicle collides with the target object based on a real-time speed and a real-time acceleration of the vehicle included in the first motion parameter and a real-time speed and a real-time acceleration of the target object, and a position of the target object relative to the vehicle included in the second motion parameter

S3022

Determining, based on a safe area of the vehicle, a safe area image in a first-person view

S302

S3023

Determining, based on the time to collision and a historical bounding box sequence of the target object included in the second motion parameter, a predicted bounding box sequence of the target object during the collision period

S3024

Determining, based on the safe area image and the predicted bounding box sequence, the intersection relationship between the vehicle and the target object in the image domain during the collision period

Determining, based on the first motion parameter, the second motion parameter, the safety margin, and the time to collision, an emergency braking decision-making result in response to the time to collision being less than or equal to a preset duration threshold and the intersection relationship being intersection

S303

Performing intelligent driving of the vehicle based on the emergency braking decision-making result

S304

**FIG. 7**

X

safe-x

Y

Ego
vehicle

safe-y

（a）

（b）

**FIG. 8**

Target point of the first
predicted bounding box

Target point of the second
predicted bounding box

（a）

（b）

**FIG. 9**

S3011

Determining the first motion parameter of the vehicle based on vehicle driving data of the driving data detected in real time by a motion detection module of the vehicle

S3012

Determining, based on driving environment data of the driving data detected by an environment detection module of the vehicle within a preset duration, the target object with the collision risk relative to the vehicle and the second motion parameter of the target object

S3013

Determining the safety margin based on a type of the target object

S301

S3021

Determining the time to collision at which the vehicle collides with the target object based on a real-time speed and a real-time acceleration of the vehicle included in the first motion parameter and a real-time speed and a real-time acceleration of the target object, and a position of the target object relative to the vehicle included in the second motion parameter

S3022

Determining, based on a safe area of the vehicle, a safe area image in a first-person view

S3023

Determining, based on the time to collision and a historical bounding box sequence of the target object included in the second motion parameter, a predicted bounding box sequence of the target object during the collision period

S302

S3024

S30241

Determining a target point sequence based on the predicted bounding box sequence

S30242

Determining a positional relationship between respective target points in the target point sequence and the safe area image corresponding to the safe area

S30243

Determining the intersection relationship between the vehicle and the target object in the image domain during the collision period as an image intersection in response to two temporally continuous target points in the target point sequence being located within the safe area image

S30244

Determining the intersection relationship between the vehicle and the target object in the image domain during the collision period as an image non-intersection in response to no two temporally continuous target points in the target point sequence being located within the safe area image

Determining, based on the first motion parameter, the second motion parameter, the safety margin, and the time to collision, an emergency braking decision-making result in response to the time to collision being less than or equal to a preset duration threshold and the intersection relationship being intersection

S303

Performing intelligent driving of the vehicle based on the emergency braking decision-making result

S304

**FIG. 10**

S3011

Determining the first motion parameter of the vehicle based on vehicle driving data of the driving data detected in real time by a motion detection module of the vehicle

S3012

S301

Determining, based on driving environment data of the driving data detected by an environment detection module of the vehicle within a preset duration, the target object with the collision risk relative to the vehicle and the second motion parameter of the target object

S3013

Determining the safety margin based on a type of the target object

S3021

Determining the time to collision at which the vehicle collides with the target object based on a real-time speed and a real-time acceleration of the vehicle included in the first motion parameter and a real-time speed and a real-time acceleration of the target object, and a position of the target object relative to the vehicle included in the second motion parameter

S3022

S302

Determining, based on a safe area of the vehicle, a safe area image in a first-person view

S3023

Determining, based on the time to collision and a historical bounding box sequence of the target object included in the second motion parameter, a predicted bounding box sequence of the target object during the collision period

S3024

Determining, based on the safe area image and the predicted bounding box sequence, the intersection relationship between the vehicle and the target object in the image domain during the collision period

S3031

Determining a predicted displacement of the vehicle based on a real-time speed and a real-time acceleration of the vehicle included in the first motion parameter, and the time to collision

S3032

Determining a predicted displacement of the target object based on a real-time speed and a real-time acceleration of the target object included in the second motion parameter and the time to collision

S303

S3033

Determining a lateral distance between the vehicle and the target object at a collision time based on the predicted displacement of the vehicle, the predicted displacement of the target object, and the position of the target object relative to the vehicle included in the second motion parameter

S3034

Determining, based on the lateral distance and the safety margin, the emergency braking decision-making result

Performing intelligent driving of the vehicle based on the emergency braking decision-making result

S304

**FIG. 11**

| Determining, based on driving data detected by a vehicle, a first motion parameter of the vehicle, a second motion parameter of a target object with a collision risk relative to the vehicle, and a safety margin | S301 |

| Determining, based on the first motion parameter and the second motion parameter, a time to collision at which the vehicle is predicted to collide with the target object, and an intersection relationship between the vehicle and the target object in an image domain during a collision period from the current time to a collision time | S302 |

S3031

Determining a predicted displacement of the vehicle based on a real-time speed and a real-time acceleration of the vehicle included in the first motion parameter, and the time to collision

S3032

Determining a predicted displacement of the target object based on a real-time speed and a real-time acceleration of the target object included in the second motion parameter and the time to collision

S3033

Determining a lateral distance between the vehicle and the target object at a collision time based on the predicted displacement of the vehicle, the predicted displacement of the target object, and the position of the target object relative to the vehicle included in the second motion parameter

S303

S3034

S30341

Determining a difference between the lateral distance and the safety margin

S30342

Determining the emergency braking decision-making result as triggering emergency braking in response to the difference being less than or equal to a preset threshold

S30343

Determining the emergency braking decision-making result as not triggering emergency braking in response to the difference being greater than a preset threshold

| Performing intelligent driving of the vehicle based on the emergency braking decision-making result | S304 |

**FIG. 12**

S3011

Determining the first motion parameter of the vehicle based on vehicle driving data of the driving data detected in real time by a motion detection module of the vehicle

S3012

Determining, based on driving environment data of the driving data detected by an environment detection module of the vehicle within a preset duration, the target object with the collision risk relative to the vehicle and the second motion parameter of the target object

S301

S3013

Determining the safety margin based on a type of the target object

S3021

Determining the time to collision at which the vehicle collides with the target object based on a real-time speed and a real-time acceleration of the vehicle included in the first motion parameter and a real-time speed and a real-time acceleration of the target object, and a position of the target object relative to the vehicle included in the second motion parameter

S3022

Determining, based on a safe area of the vehicle, a safe area image in a first-person view

S302

S3023

Determining, based on the time to collision and a historical bounding box sequence of the target object included in the second motion parameter, a predicted bounding box sequence of the target object during the collision period

S3024

Determining, based on the safe area image and the predicted bounding box sequence, the intersection relationship between the vehicle and the target object in the image domain during the collision period

S3031

Determining a predicted displacement of the vehicle based on a real-time speed and a real-time acceleration of the vehicle included in the first motion parameter, and the time to collision

S3032

Determining a predicted displacement of the target object based on a real-time speed and a real-time acceleration of the target object included in the second motion parameter and the time to collision

S303

S3033

Determining a lateral distance between the vehicle and the target object at a collision time based on the predicted displacement of the vehicle, the predicted displacement of the target object, and the position of the target object relative to the vehicle included in the second motion parameter

S3034

Determining, based on the lateral distance and the safety margin, the emergency braking decision-making result

S3041

Generating, based on the autonomous emergency braking system, the first motion parameter, and the second motion parameter, a control command in response to the emergency braking decision-making result characterizing a need to trigger an autonomous emergency braking

S304

S3042

Performing assisted driving of the vehicle based on the control command

**FIG. 13**

Determining, based on driving data detected by a vehicle, a first motion parameter of the vehicle, a second motion parameter of a target object with a collision risk relative to the vehicle, and a safety margin — S301

Determining, based on the first motion parameter and the second motion parameter, a time to collision at which the vehicle is predicted to collide with the target object, and an intersection relationship between the vehicle and the target object in an image domain during a collision period from the current time to a collision time — S302

Determining a predicted displacement of the vehicle based on a real-time speed and a real-time acceleration of the vehicle included in the first motion parameter, and the time to collision — S3031

Determining a predicted displacement of the target object based on a real-time speed and a real-time acceleration of the target object included in the second motion parameter and the time to collision — S3032

Determining a lateral distance between the vehicle and the target object at a collision time based on the predicted displacement of the vehicle, the predicted displacement of the target object, and the position of the target object relative to the vehicle included in the second motion parameter — S3033

— S3034

— S3034 1

Determining a difference between the lateral distance and the safety margin — S30341

Determining the emergency braking decision-making result as triggering emergency braking in response to the difference being less than or equal to a preset threshold — S30342

Determining the emergency braking decision-making result as not triggering emergency braking in response to the difference being greater than a preset threshold — S30343

— S303

Generating, based on the autonomous emergency braking system, the first motion parameter, and the second motion parameter, a control command in response to the emergency braking decision-making result characterizing a need to trigger an autonomous emergency braking — S3041

— S3042

Outputting prompting information based on the alert command to remind the driving user of the vehicle to perform braking in response to the control command being an alert command — S30421

Preforming assisted braking of the vehicle based on the partial braking command in response to the control command being a partial braking command — S30422

Performing emergency braking of the vehicle based on the full braking command in response to the control command being the full braking command — S30423

— S304

**FIG. 14**

FIG. 15

1500

First determination module

First determination unit — 15011

Second determination unit — 15012

Third determination unit — 15013

1501

Second determination module

Fourth determination unit — 15021

Fifth determination unit — 15022

Sixth determination unit — 15023

Seventh determination unit — 15024

1502

Third determination module

Eighth determination unit — 15031

Ninth determination unit — 15032

Tenth determination unit — 15033

Eleventh determination unit — 15034

1503

Driving module — 1504

Intelligent driving decision-making device

**FIG. 16**

1700

Processor — 1701

Memory | Input means | Output means

1702 1703 1704

Electronic device

**FIG. 17**